Europäisches Patentamt

European Patent Office

Office européen des brevets

(11) Veröffentlichungsnummer : **0 157 919**
**B1**

# (12) EUROPÄISCHE PATENTSCHRIFT

(45) Veröffentlichungstag der Patentschrift :
09.09.87

(51) Int. Cl.⁴ : **B 60 J   3/00**

(21) Anmeldenummer : **84114778.8**

(22) Anmeldetag : **05.12.84**

(54) Sonnenblende, insbesondere für Fahrzeuge.

(30) Priorität : **10.02.84 DE 3404735**

(43) Veröffentlichungstag der Anmeldung :
**16.10.85 Patentblatt 85/42**

(45) Bekanntmachung des Hinweises auf die Patenterteilung : **09.09.87 Patentblatt 87/37**

(84) Benannte Vertragsstaaten :
**DE FR GB IT SE**

(56) Entgegenhaltungen :
**EP-A- 0 096 154**
**US-A- 2 894 576**

(73) Patentinhaber : **Gebr. Happich GmbH**
**Postfach 10 02 49 Clausenbrücke 1**
**D-5600 Wuppertal 1 (DE)**

(72) Erfinder : **Dietz, Günter**
**Eggenbruch 97**
**D-5600 Wuppertal 1 (DE)**
Erfinder : **Nowak, Manfred**
**Steinberg 16**
**D-5650 Solingen 1 (DE)**

**Beschreibung**

Die Erfindung betrifft eine Sonnenblende, insbesondere für Fahrzeuge, mit einem verdeckbaren Spiegel.

In ständig zunehmendem Maße werden Fahrzeug-Sonnenblenden mit Spiegeln bestückt und aus verschiedenen Gründen, wie z. B. Verminderung der Blendungsgefahr, mit einer Abdeckung versehen. Als Spiegelabdeckungen werden im allgemeinen am Sonnenblendenkörper oberhalb oder unterhalb des Spiegels angelenkte Klappdeckel verwendet. Solche Klappdeckel müssen aber nun separat hergestellt und an der Sonnenblende befestigt werden, was die Herstellungskosten der Sonnenblende erhöht, zumal die Sonnenblenden und Klappdeckel auch Mittel aufweisen müssen, die es ermöglichen, die Klappdeckel in der geschlossenen oder geöffneten Lage zu halten.

Durch die EP-A-0 096 154 ist es bekannt geworden, an einer Sonnenblende einen Klappdeckel anzuordnen und an diesem einen Spiegel zu befestigen. Damit kann der Spiegel nach Auf- oder Umklappen des Klappdeckels eingesehen und nach Zurückklappen des Klappdeckels wieder verdeckt werden. Bei der bekannten Lehre ist eine gewollte Verlagerung des Spiegels beim Gebrauch vorgesehen, die aber oftmals nicht erwünscht ist.

Der vorliegenden Erfindung liegt nun die Aufgabe Zugrunde, eine Sonnenblende, insbesondere für Fahrzeuge, mit einem verdeckbaren Spiegel zu schaffen, bei der der Spiegel in der verdeckten oder unverdeckten Lage die gleiche, z. B. mittige Anordnung an der Sonnenblende beibehält, wobei zum Verdecken des Spiegels keine über den Spiegel bringbaren Elemente mehr erforderlich sind, so daß die Sonnenblende auch einfacher und preiswerter herstellbar ist.

Gemäß der Erfindung wird diese Aufgabe dadurch gelöst, daß der Spiegel um eine Randkante verschwenkbar mit dieser Randkante in eine Richtung normal zur Randkante in der Spiegelebene verschiebbar und dadurch umwendbar an der Sonnenblende angeordnet ist.

Der besondere Vorteil der Erfindung besteht somit darin, daß der Spiegel durch bloßes Umwenden jeweils wahlweise in eine verdeckte oder einsehbare Position gebracht und damit auf Klappdeckel oder ähnliche Hilfsmittel verzichtet werden kann.

In Ausgestaltung der Erfindung kann vorgesehen sein, daß der Spiegel an einer Randkante eine Schwenkachse aufweist, die in seitlichen, an der Sonnenblende angeordneten Führungen verschiebbar aufgenommen ist. Ein Alternativ-Vorschlag besteht darin, daß der Spiegel an einer Randkante eine Schwenkachse aufweist, deren Enden in in Kulissenführungen der Sonnenblende verschiebbar aufgenommenen Lagerböcken eingreifen. Zum Wenden des Spiegels kann dieser an der, der Schwenkachse abgewandten Randkante nun zufolge der aufgezeigten Maßnahmen erfaßt, hochgeklappt, in den Führungen verschoben und wieder heruntergeklappt werden, wonach die vormals außenliegende Spiegelseite auf der Sonnenblende aufliegt und damit verdeckt ist. Um beim Verschieben des Spiegels einem Verkanten entgegenzuwirken, ist es von Vorteil, wenn die Lagerböcke durch eine Strebe starr miteinander verbunden sind.

In bevorzugter Ausgestaltung der Erfindung ist vorgesehen, daß der Spiegel baueinheitlich mit einer rückseitigen, ihn auch randseitig umfassenden Abdeckung ausgebildet ist. Auf diese Weise kann den ästhetischen Anforderungen, die an eine Fahrzeug-Sonnenblende gestellt werden, Rechnung getragen werden ; denn die Abdeckung kann sowohl in ihrer farblichen Gestaltung als auch in ihrer Oberflächenstruktur dem jeweiligen Aussehen der Sonnenblende angepaßt werden.

Vorzugsweise ist die Abdeckung mit der Schwenkachse ausgerüstet. Diese Maßnahme schließt zum einen die Möglichkeit ein, die Schwenkachse als einen, an der Abdeckung festzulegenden Stift auszubilden oder zum anderen, die Schwenkachse einstückig und materialeinheitlich mit der Abdeckung zu gestalten, welch letzteres sich insbesondere dann anbietet, wenn die Abdeckung als Kunststoff-Spritzgußteil ausgeführt ist, was bevorzugterweise der Fall ist.

In weiterer Ausgestaltung der Erfindung kann vorgesehen sein, daß der Spiegel an einem an der Sonnenblende befestigten und mit Kulissenführungen ausgebildeten kastenförmigen Gehäuse umwendbar angeordnet ist. Damit ergibt sich die Möglichkeit, eine Baueinheit einschließlich des Verstellmechanismusses zusammenzusetzen und an eine fertige Sonnenblende anbringen zu können.

Eine Weiterbildung der Erfindung besteht darin, daß an dem Spiegel und/oder an der Abdeckung Federn zur Unterstützung der Spiegelverschiebung einendig angreifen, deren jeweils anderes Ende an der Sonnenblende oder vorzugsweise am Gehäuse befestigt ist, wobei die Anordnung der Federn so getroffen ist, daß sie durch das jeweilige Umwenden des Spiegels entspannbar und wieder spannbar sind. In der Praxis bedeutet diese Maßnahme, daß die Schwenkachse oder die Lagerböcke durch die Federn in den Führungen über einen gewissen Weg verschoben werden, sobald die der Schwenkachse gegenüberliegende Spiegel-Randkante von der Sonnenblende weggeklappt wird.

Weiterhin bedeutet diese Maßnahme, daß der Spiegel durch die Kraft der Federn jeweils lagepositioniert gehalten wird.

Eine weitere bevorzugte Ausgestaltung der Erfindung ist darin zu sehen, daß der Spiegel vorzugsweise zusammen mit dem Gehäuse in einer Ausnehmung der Sonnenblende derart umwendbar angeordnet ist, daß er sowohl in der verdeckten als auch in der einsehbaren Lage die entsprechende Außenfläche der Sonnenblende nicht überragt. Hierdurch ergibt sich ein gefälliges Aussehen der Sonnenblende und mangels vorstehenden Ecken und Kanten wird auch den Sicherheitsinteressen Genüge getan.

Schließlich kann in Weiterbildung der Erfindung vorgesehen sein, daß das Gehäuse mindestens eine, an einem Spiegelrand angrenzende Kammer mit einer darin angeordneten elektrischen Lichtquelle aufweist. Dadurch ergibt sich die Möglichkeit, den an der Sonnenblende angeordneten Spiegel auch bei Dunkelheit benutzen zu können.

Ein Ausführungsbeispiel der Erfindung wird im folgenden anhand der Zeichnung näher erläutert. Es zeigen :

Figur 1 eine Sonnenblende mit einem daran umwendbar angeordneten Spiegel,

Figur 2 einen Schnitt II-II nach Fig. 1 mit verdeckter Spiegelanordnung,

Figur 3 einen Schnitt II-II nach Fig. 1 mit einsehbarer Spiegelanordnung,

Figur 4 eine aus Spiegel und Spiegelgehäuse bestehende Einzelheit der Erfindung,

Figur 5 einen Schnitt V-V nach Fig. 4,

Figur 6 die Rückansicht von Fig. 4 und

Figuren 7 und 8 jeweils einen Schnitt A-B nach Fig. 4 mit unterschiedlicher Spiegelanordnung.

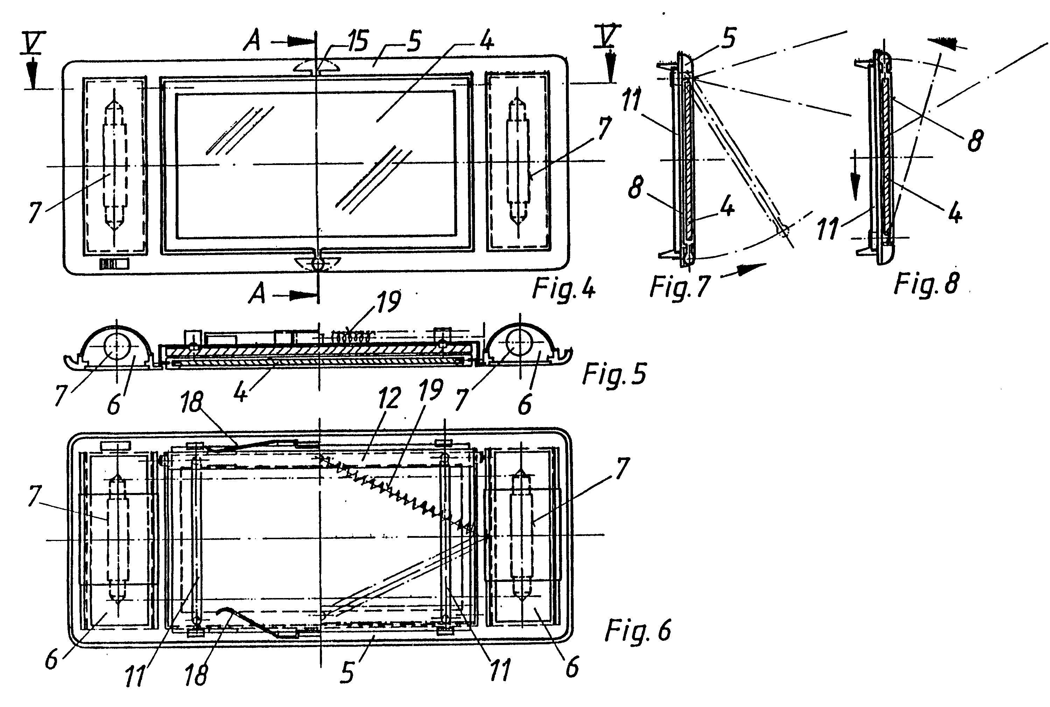

Die Sonnenblende besteht im wesentlichen aus einem Sonnenblendenkörper 1 mit einem an einem im Bereich der oberen Längskante angeordneten Schwenklager 2, einer anderen Endbereich derselben Längsachse angeordneten Gegenlagerachse 3, die lösbar in ein nicht dargestelltes Gegenlagergehäuse einrastbar ist, und aus einem am Sonnenblendenkörper angeordneten Spiegel 4. Im dargestellten Ausführungsbeispiel sitzt der Spiegel 4 in einem Gehäuse 5, in dem auch beidseitig des Spiegels 4 Kammern 6 für elektrische Lichtquellen 7 (vergleiche Fig. 4-6) ausgebildet sind.

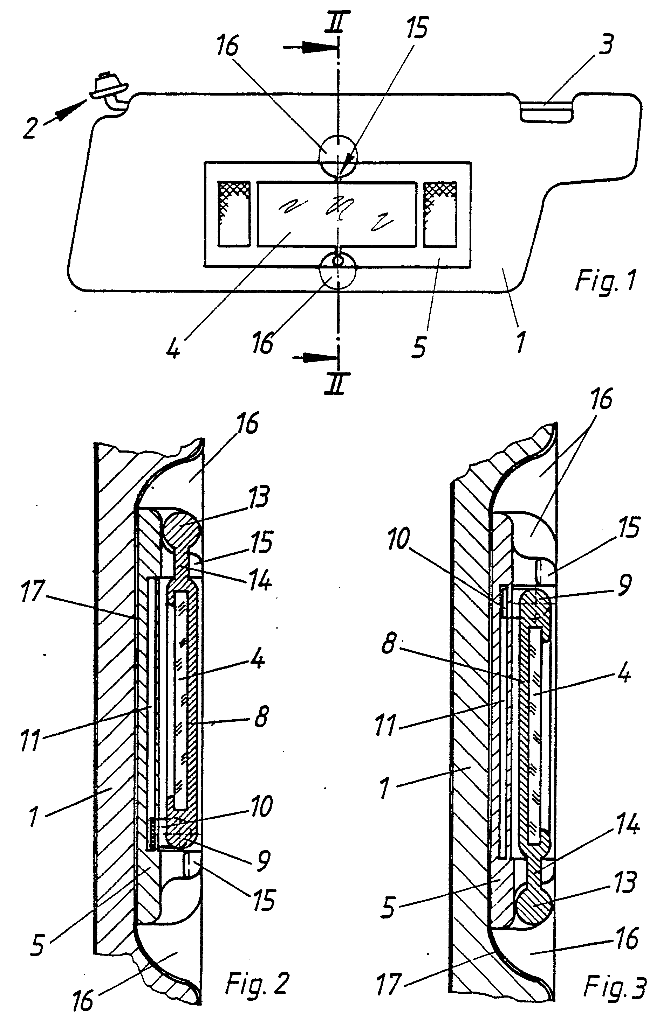

Wie insbesondere die im Maßstab gegenüber Fig. 1 vergrößerten Figuren 2, 3 und 7, 8 erkennen lassen, ist der Spiegel 4 baueinheitlich mit einer rückseitigen, ihn auch randseitig umfassenden Abdeckung 8 ausgebildet und zusammen mit dieser umwendbar im Gehäuse 5 gelagert. Die Abdeckung 8 weist Zapfen 9 auf, die sich an einem Spiegelrandbereich befinden, miteinander eine Schwenkachse bilden und von Lagerböcken 10 aufgenommen sind, welche ihrerseits verschiebbar in Kulissenführungen 11 des Gehäuses 5 sitzen. Die Lagerböcke 10 sind zweckmäßigerweise durch einen Steg 12 miteinander verbunden. Die Abdeckung 8 besteht vorzugsweise ebenso wie das Gehäuse 5 aus einem Kunststoff-Spritzgußteil und weist einen angeformten, als Handhabe dienenden Vorsprung 13 auf, der im mittleren Bereich der der Schwenkachse gegenüberliegenden Randkante angeformt ist. Der Vorsprung besitzt einen eingeschnürten Halsteil 14, welcher von einem hinterschnittenen Gehäuseschlitz 15 aufgenommen ist, der an einander gegenüberliegenden inneren Gehäuse-Randbereichen vorgesehen ist und der jeweils in eine Griffmulde 16 übergeht, die im Sonnenblendenkörper 1 ausgespart ist, und zwar, weil das Gehäuse 5 vorzugsweise in einer muldenförmigen Vertiefung 17 des Sonnenblendenkörpers 1 angeordnet ist.

Die aus Spiegel 4 und Abdeckung 8 bestehende Baueinheit ist durch Federn, die als Schraubenfedern 19 oder Blattfedern 18 ausgebildet sein können, belastet. Die Anordnung ist dabei so getroffen, daß dann, wenn die Baueinheit durch Herausziehen des Vorsprungs 13 aus der Sonnenblendenebene herausgeschwenkt wird, die Schwenkachse bzw. die Lagerböcke in Richtung zum anderen Ende der Kulissenführung 11 verschoben wird bzw. werden. Die Federn übernehmen dabei etwa den halben Verschiebeweg.

Soll also der Spiegel 4 aus seiner verdeckten Lage (vergleiche z. B. Fig. 2) in seine einsehbare Lage (vergleiche z. B. Fig. 3) umgeschwenkt werden, so ist es hierfür lediglich erforderlich, den Vorsprung 13 mit einer Fingerkuppe aus dem jeweiligen Gehäuseschlitz 15 herauszuziehen und um insgesamt 180 Winkelgrade zu verschwenken und gleichzeitig die Schwenkachse in der Kulissenführung in Richtung zum jeweils gegenüberliegenden Ende zu verschieben. Dieser Bewegungsablauf wird durch die Fig. 7 und 8 verdeutlicht.

**Patentansprüche**

1. Sonnenblende, insbesondere für Fahrzeuge, mit einem verdeckbaren Spiegel (4), dadurch gekennzeichnet, daß der Spiegel (4) um eine seiner Randkanten verschwenkbar mit dieser Randkante in eine Richtung normal zur Randkante in der Spiegelebene verschiebbar und dadurch umwendbar an der Sonnenblende angeordnet ist.

2. Sonnenblende nach Anspruch 1 und/oder 2, dadurch gekennzeichnet, daß der Spiegel (4) an einer Randkante eine Schwenkachse aufweist, die in seitlichen, an der Sonnenblende angeordneten Führungen (11) verschiebbar aufgenommen ist.

3. Sonnenblende nach Anspruch 1 und/oder 2, dadurch gekennzeichnet, daß der Spiegel (4) an einer Randkante eine Schwenkachse aufweist, deren Enden (Zapfen 9) in in Kulissenführungen (11) der Sonnenblende verschiebbar aufgenommenen Lagerböcken (10) eingreifen.

4. Sonnenblende nach einem oder mehreren der Ansprüche 1 bis 4, dadurch gekennzeichnet, daß der Spiegel 4 baueinheitlich mit einer rückseitigen, ihn auch randseitig umfassenden Abdeckung (8) ausgebildet ist.

5. Sonnenblende nach einem oder mehreren der Ansprüche 3 bis 5, dadurch gekennzeichnet, daß die Abdeckung (8) mit der Schwenkache ausgerüstet ist.

6. Sonnenblende nach einem oder mehreren der Ansprüche 1 bis 6, dadurch gekennzeichnet, daß der Spiegel (4) in einem an der Sonnenblende befestigten und mit Kulissenführungen (11) ausgebildeten kastenförmigem Gehäuse (5) umwendbar angeordnet ist.

7. Sonnenblende nach einem oder mehreren der Ansprüche 2 bis 7, dadurch gekennzeichnet, daß an dem Spiegel (4) und/oder an der Abdeckung (8) Federn (18, 19) zur Unterstützung der Spiegelverschiebung einendig angreifen, deren jeweils anderes Ende an der Sonnenblende oder am Gehäuse (5) befestigt ist, wobei die Anordnung der Federn (18, 19) so getroffen ist, daß sie durch das jeweilige Umwenden des Spiegels (4) entspannbar und wieder spannbar sind.

8. Sonnenblende nach einem oder mehreren der Ansprüche 1 bis 8, dadurch gekennzeichnet, daß der Spiegel (4) vorzugsweise zusammen mit dem Gehäuse (5) in einer Ausnehmung (17) der Sonnenblende derart umwendbar angeordnet ist, daß er sowohl in der verdeckten als auch in der einsehbaren Lage die entsprechende Außenfläche der Sonnenblende nicht überragt.

9. Sonnenblende nach einem oder mehreren der vorangehenden Ansprüche, dadurch gekennzeichnet, daß das Gehäuse (5) mindestens eine, an einem Spiegelrand angrenzende Kammer (6) mit einer darin angeordneten elektrischen Lichtquelle (7) aufweist.

## Claims

1. A sun visor, especially for vehicles, having a mirror (4) which can be concealed from sight, characterised in that the mirror (4) is arranged to be tiltable about one of its peripheral edges with that edge being slidable in a direction normal to the edge in the plane of the mirror whereby the mirror can be inverted.

2. A sun visor according to claim 1, characterised in that the mirror (4) is provided, at a peripheral edge thereof, with a swivelling axis which is capable of sliding movement in lateral guideways (11) on the sun visor.

3. A sun visor according to claim 1 and/or claim 2, characterised in that the mirror (4) is provided, at a peripheral edge thereof, with a swivelling axis the ends of which (bearings 9) engage in journals (10) capable of sliding movement in slide guideways (11) on the sun visor.

4. A sun visor according to one or more of claim 1-3, characterised in that the mirror (4) is formed, in a unitary manner, with a rear cover (8) which also embraces the peripheral edges of the mirror.

5. A sun visor according to claim 4, characterised in that the cover (8) is provided with the swivelling axis.

6. A sun visor according to one or more of claims 1-5, characterised in that the mirror (4) is invertably arranged in a bos-like housing (5) which is secured to the sun visor and which is provided with slide guideways (11).

7. A sun visor according to one or more of claims 2-6, characterised in that there are springs (18, 19) which each have one end in engagement with the mirror (4) and/or with the cover (8) to facilitate sliding movement of the mirror, while the other ends of the springs are secured to the sun visor or to the housing (5), the arrangement of the springs (18, 19) being such that, during each inversion of the mirror (4), they are unstressed and then re-stressed.

8. A sun visor according to one or more of claims 1-7, characterised in that the mirror (4), together with the housing (5) if desired, is invertably arranged in a recess (17) of the sun visor so that it does not project beyond the outer surface of the sun visor neither in its concealed position nor in its viewing position.

9. A sun visor according to one or more of the preceding claims, characterised in that the housing (5) is provided with at least one source of electric light (7) arranged in a compartment (6) located adjacent an edge of the mirror.

## Revendications

1. Pare-soleil, en particulier pour véhicules, comportant un miroir masquable (4), caractérisé en ce que le miroir (4) est disposé de façon à pouvoir pivoter autour de l'un de ses bords, à pouvoir se déplacer avec ce bord dans une direction normale au bord dans le plan du miroir et à pouvoir ainsi tourner, sur le pare-soleil.

2. Pare-soleil selon la revendication 1 et/ou 2, caractérisé en ce que le miroir (4) comporte, à un bord, un axe de pivotement qui est reçu de façon à pouvoir se déplacer dans des guides latéraux (11) situés sur le pare-soleil.

3. Pare-soleil selon la revendication 1 et/ou 2, caractérisé en ce que le miroir (4) comporte, à un bord, un axe de pivotement dont les extrémités (tenons 9) s'engagent dans des supports (10) reçus de façon à pouvoir coulisser dans des guides de coulisse (11) du pare-soleil.

4. Pare-soleil selon une ou plusieurs des revendications 1 à 3, caractérisé en ce que le miroir (4) est réalisé d'un seul tenant avec un élément de recouvrement (8) postérieur, l'embrassant également sur le bord.

5. Pare-soleil selon une ou plusieurs des revendications 2 à 4, caractérisé en ce que l'élément de recouvrement (8) est pourvu de l'axe de pivotement.

6. Pare-soleil selon une ou plusieurs des revendications 1 à 5, caractérisé en ce que le miroir (4) est placé de façon à pouvoir tourner dans un boîtier (5) en forme de boîte fixé au pare-soleil et comportant des guides de coulisse (11).

7. Pare-soleil selon une ou plusieurs des revendications 2 à 6, caractérisé en ce que des ressorts (18, 19) destinés à faciliter le déplacement du miroir s'appliquent par une extrémité au miroir (4) et/ou à l'élément de recouvrement (8), ressorts dont l'autre extrémité est fixée au pare-soleil ou au boîtier (5), l'agencement des ressorts (18, 19) étant tel qu'ils peuvent être détendus et retendus par chaque retournement du miroir (4).

8. Pare-soleil selon une ou plusieurs des revendications 1 à 7, caractérisé en ce que le miroir (4) est disposé, de préférence, de façon à pouvoir tourner avec le boîtier (5) dans un évidement (17) du pare-soleil de telle façon que, tant dans la position masquée dissimulée que dans la position visible, il ne dépasse pas de la surface extérieure correspondante du pare-soleil.

9. Pare-soleil selon une ou plusieurs des revendications précédentes, caractérisé en ce que le boîtier (5) comporte au moins une chambre (6) contiguë au bord du miroir, dans laquelle est placée une source lumineuse électrique (7).

Fig. 1

Fig. 2

Fig. 3

*Fig. 4*

*Fig. 7*

*Fig. 8*

*Fig. 5*

*Fig. 6*

0 157 919